# EUROPÄISCHE PATENTSCHRIFT

(11) **EP 2 107 074 B1**
(45) Veröffentlichungstag und Bekanntmachung des Hinweises auf die Patenterteilung: **08.08.2012**
(21) Anmeldenummer: 09003947.0
(22) Anmeldetag: 19.03.2009
(51) Int. Cl.: F16F 1/37, C08L 75/04, E04F 15/20

(54) **Formkörper**
Moulded part
Article moulé

(30) Priorität: 04.04.2008 AT 5392008
(43) Veröffentlichungstag der Anmeldung: 07.10.2009
(73) Patentinhaber: Getzner Werkstoffe Holding GmbH, 6706 Bürs (AT)
(72) Erfinder: Dietrich, Martin, 6830 Rankweil (AT); Burtscher, Peter, 6700 Bludenz (AT)
(74) Vertreter: Hofmann, Ralf U.

(56) Entgegenhaltungen:
- EP-A1- 0 308 876
- EP-A1- 1 898 028
- CH-A- 532 462
- DE-A1- 4 004 208

## Beschreibung

Die vorliegende Erfindung betrifft einen Formkörper, insbesondere Matte, zur Schwingungsisolierung mit einem zelligen Polyurethanelastomer und mit einem Gummigranulat.

Aus der DE 29 01 744 ist bereits ein Elastikbelag für Sportstätten aus einem gebundenen Granulat bekannt, bei dem ca. 50 Gew.-% bis 90 Gew.-% Polyurethanweichschaumflocken verwendet werden, um dem Elastikbelag gute Dämpfungseigenschaften zu verleihen. Allerdings wurde festgestellt, dass für die konkrete Anwendung in Sportstätten die Elastizität der Polyurethanweichschaumflocken nicht ausreicht. Daher wird von der genannten Schrift vorgeschlagen, dem Elastikbelag auch noch 10 Gew.-% bis 15 Gew.-% Gummigranulat zuzusetzen.

In der DE 23 11 654 A1 werden ebenfalls Sporthallenbeläge offenbart. In mehreren Ausführungsbeispielen wird ein solcher Belag mit einer Grundschicht aus einem Polyurethan-Verbund-Weichschaum, insbesondere mit einem spezifischen Gewicht von etwa 200kg/m³, vorgeschlagen. In diesem Verbundweichschaum sind alte Polyurethanschaumflocken mit eingearbeitet. In alternativen Ausführungsvarianten besteht die Grundschicht aus mit Polyurethan gebundenem Gummiabrieb.

Im Gegensatz zum genannten Stand der Technik geht es bei der vorliegenden Erfindung allerdings nicht um einen Elastikbelag für Sportstätten sondern, wie oben bereits angeführt, um eine Matte bzw. einen Formkörper zur Schwingungsisolierung, welche(r) vor allem zur Körperschallisolierung und Schwingungsentkoppelung bzw. Lagerung von haustechnischen Anlagen und insbesondere zur Lagerung von Maschinen oder Maschinenfundamenten eingesetzt werden soll.

Im Gegensatz zu der Verwendung als Elastikbelag bei Sportstätten treten in diesem Anwendungsbereich wesentlich höhere statische Kräfte auf, welche durch die Auflast der haustechnischen Anlagen, Maschinen und/oder Maschinenfundamente vorgegeben sind.

In der EP 1 219 749 A2 wird eine Gleiskonstruktion für in eine Fahrbahn eingelassene Schienen erörtert. In Absatz 0012 dieser Schrift wird von einem Gummi-Schaumstoff-Formteil gesprochen.

Die CH 532 462 A beschreibt einen Verbundschaumstoff-Quader aus Polyurethan mit einem Füllstoff vorrangig aus Polyurethanschaumkörnern und gegebenenfalls unter Beigabe von geschäumtem Kautschuk und mit einem aufgeschäumten Verbinder. Die EP 1 898 028 A1 und die EP 0 308 876 A1 zeigen weiteren Stand der Technik.

Die DE 40 04 208 A1 offenbart einen schwingungsdämpfenden Formkörper einer Schalldämmvorrichtung an Strassenbahnschienen, wobei der Formkörper u.a. aus geschäumtem Polyurethan und Gummireifenteilen besteht.

Aufgabe der vorliegenden Erfindung ist es, einen gattungsgemäßen Formkörper speziell für den genannten Einsatzbereich zu optimieren.

Dies wird erfindungsgemäß erreicht, indem das zellige Polyurethanelastomer eine Dichte von zumindest 150 kg/m³ aufweist und das Gummigranulat Körner aus geschäumtem Gummielastomer aufweist oder daraus besteht.

Durch die Dichte von zumindest 150kg/m³ wird einerseits sichergestellt, dass das zellige Polyurethanelastomer nicht zu weich ist, während durch die Verwendung von Körnern aus geschäumtem Gummielastomer ein Gummigranulat zum Einsatz kommt, das deutlich weicher reagiert, als die üblicherweise z. B. aus Altreifen hergestellten Gummigranulate, welche kompakt und wesentlich härter sind. Durch diese beiden Maßnahmen liegen die elastischen Eigenschaften des zelligen Polyurethanelastomers und des geschäumten Gummielastomers im Gegensatz zum genannten Stand der Technik zumindest größenordnungsmäßig in ähnlichen Bereichen. Dabei wird ausgenutzt, dass die Steifigkeit bei geschäumten Gummielastomeren mit der Belastung progressiv zunimmt während die Steifigkeit von zelligem Polyurethanelastomer mit der Belastung eher degressiv zunimmt. Aus der Mischung dieser beiden Materialien kann ein Formkörper und insbesondere eine Matte hergestellt werden, die eine zumindest näherungsweise lineare Steifigkeitszunahme bei zunehmender Belastung über einen relativ weiten Belastungsbereich aufweist. In diesem Zusammenhang sei darauf hingewiesen, dass im Sinne der vorliegenden Erfindung ein zelliges Polyurethanelastomer insbesondere einen Polyurethanschaum bezeichnet, also ein poröses Polyurethan mit Gas- oder Lufteinschlüssen. Unter einem geschäumten Gummielastomer wird ein natürliches oder künstliches Kautschukelastomer verstanden, welches porös, also mit Gas- oder Lufteinschlüssen versehen, ist. Solche geschäumten Gummielastomere werden häufig auch als Zellkautschuk oder Moosgummi bezeichnet.

Es ist denkbar, dass das Gummigranulat nicht ausschließlich aus Körnern aus geschäumtem Gummielastomer besteht, sondern auch Körner aus massivem, also nicht geschäumtem Gummi aufweist. Bevorzugt ist jedoch, dass das Gummigranulat zu zumindest 50 Gew.-%, vorzugsweise zu zumindest 80 Gew.-%, besonders bevorzugt vollständig aus Körnern aus geschäumtem Gummielastomer besteht.

Das zellige Polyurethanelastomer und die Körner des Gummigranulats sind günstigerweise in Form einer heterogenen Mischung in dem Formkörper angeordnet. Der Formkörper bzw. die Matte bildet somit in der bevorzugten Ausführungsform eine Schicht, die aus einem Stoffgemisch bzw. Kongolmerat besteht, welches das zellige Polyurethanelastomer und die Körner des Gummigranulats enthält. Der Formkörper selbst weist also somit günstigerweise nicht zumindest zwei oder mehrere verschiedene, in sich homogene Schichten aus den genannten Materialien auf. Diese Bestandteile sind vielmehr bevorzugt miteinander vermischt in dem Formkörper vorhanden.

Dabei sei darauf hingewiesen, dass der so ausgebildete Formkörper natürlich selbst Bestandteil oder Schicht eines mehrschichtigen Verbundkörpers sein kann. So ist es durchaus denkbar, dass der Formkörper noch mit weiteren Schichten oder Körpern verbunden ist. Dies ändert aber natürlich nichts an dem grundsätzlichen Aufbau des Formkörpers selbst.

Eine erste Gruppe von Ausführungsformen der Erfindung sieht vor, dass das zellige Polyurethanelastomer eine Matrix bildet, in die Körner des Gummigranulats eingebettet sind. Das zellige Polyurethanelastomer bildet bei diesen Ausführungsvarianten somit eine Grundmasse bzw. ein Grundgerüst, in die die anderen Komponenten, also vor allem die Körner des Gummigranulats, eingebettet sind.

Alternativ sehen bevorzugte Ausführungsvarianten jedoch vor, dass der Formkörper Körner eines Granulats aus dem zelligen Polyurethanelastomer aufweist, vorzugsweise das zellige Polyurethanelastomer ausschließlich in Form von Körnern eines Granulats in dem Formkörper vorliegt.

Unter einem Granulat wird im Sinne der Erfindung eine Substanz in Kornform verstanden. Es handelt sich dabei somit um eine Ansammlung einzelner Körner, welche durch geeignete Maßnahmen miteinander verbunden sind.

Zur Herstellung eines Formkörpers, bei dem das zellige Polyurethanelastomer eine Matrix bildet, ist günstigerweise vorgesehen, dass die Körner des Gummigranulats, vorzugsweise des geschäumten Gummielastomers, mit einem fertig gemischten Reaktionsgemisch des zelligen Polyurethanelastomers oder mit zumindest einer Komponente des Reaktionsgemisches des zelligen Polyurethanelastomers gemischt werden und anschließend das Reaktionsgemisch, gegebenenfalls unter Hinzufügung von zumindest einer zweiten Komponente des Reaktionsgemisches des zelligen Polyurethanelastomers und/oder Wärme, zu zelligem Polyurethanelastomer ausreagiert wird.

Weist der Formkörper Körner aus dem zelligen Polyurethanelastomer auf, so sieht ein bevorzugtes Herstellungsverfahren vor, dass die Körner des Gummigranulats, vorzugsweise des geschäumten Gummielastomers, und die Körner des Granulats aus dem zelligen Polyurethanelastomer mit dem Bindemittel gemischt werden und anschließend die so hergestellte Mischung, vorzugsweise unter Hinzufügung von Wärme und/oder in einem Hohlkörper, gepresst wird.

Bei beiden Gruppen von bevorzugten Ausführungsvarianten ist günstigerweise vorgesehen, dass der Formkörper zu zumindest 90 Gew.-% aus dem zelligen Polyurethanelastomer und den Körnern aus geschäumtem Gummielastomer und dem gegebenenfalls vorhandenen Bindemittel besteht. Er kann auch vollständig aus den zwei bzw. drei genannten Komponenten aufgebaut sein. Es ist aber auch denkbar, weitere Zusatzstoffe in den Formkörper mit einzubauen. Dies können z. B. Füllstoffe aus geschäumten Silikonen, vorzugsweise aus geschäumtem Silikongranulat sein, die insbesondere für tiefere Temperaturen geeignet sind. Der Gewichtsanteil dieser sonstigen Füllstoffe liegt aber, wie gesagt, günstigerweise unter 10% am Gesamtgewicht des Formkörpers.

Die Dichte des zelligen Polyurethanelastomers bzw. der daraus hergestellten Matrix oder der daraus hergestellten Körner beträgt bevorzugterweise zwischen 200 kg/m³ und 900 kg/m³. Die Dichte der Körner aus geschäumtem Gummielastomer beträgt günstigerweise zumindest 100 kg/m³, vorzugsweise ebenfalls zwischen 200 kg/m³ und 900 kg/m³. Die Porösität des zelligen Polyurethanelastomers beträgt, unabhängig davon, ob es in Form einer Matrix oder in Form von Körnern vorliegt, günstigerweise zumindest 10%. Die Porösität der Körner aus geschäumtem Gummielastomer beträgt günstigerweise ebenfalls zumindest 10%.

Weitere Einzelheiten und Merkmale der vorliegenden Erfindung ergeben sich aus der nachfolgenden Beschreibung bevorzugter Ausführungsformen der Erfindung. Dabei zeigen:
- Fig. 1: eine Matte mit Körnern aus zelligem Polyurethanelastomer und
- Fig. 2: eine Matte, bei dem das zellige Polyurethanelastomer eine Matrix bildet, in die die Körner des Gummigranulats eingebettet sind.

Bei den in den Figuren dargestellten Ausgestaltungsvarianten handelt es sich um Matten. Der Vollständigkeit halber sei in diesem Zusammenhang aber explizit darauf hingewiesen, dass auch beliebig anders ausgeformte Formkörper in erfindungsgemäßer Art und Weise ausgebildet werden können.

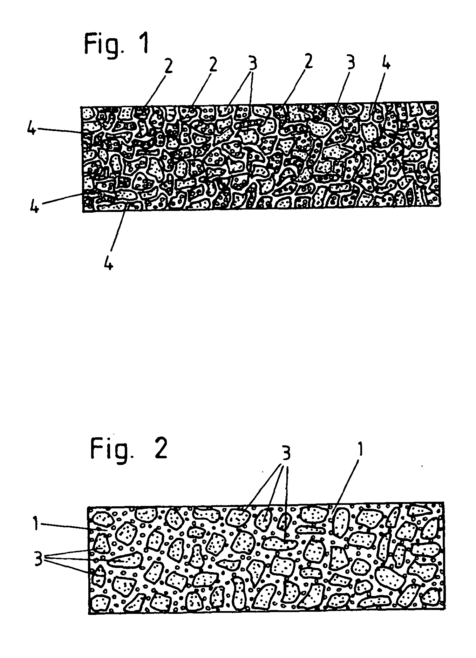

Das erste Ausführungsbeispiel gem. Fig. 1 zeigt eine Matte zur Schwingungsisolierung gemäß der Erfindung in einer Seitenansicht, bei der Körner 2 aus zelligem Polyurethanelastomer mit Körnern 3 des Gummigranulats eine heterogene Mischung bilden. Die Körner 3 des Gummigranulats bestehen im gezeigten Ausführungsbeispiel zur Gänze aus geschäumtem Gummielastomer. Es sind also keine massiven Gummikörner vorhanden, auch wenn dies grundsätzlich denkbar ist, wie dies weiter oben bereits ausgeführt wurde. Die Körner 2 des zelligen Polyurethanelastomers und die Körner 3 aus geschäumtem Gummielastomer sind mittels eines Bindemittels 4 miteinander verbunden. Es kann sich bei dem Bindemittel 4 z. B. um einen Ein-Komponenten-Polyurethanbinder wie z. B. Isocyanat, aber auch um Zwei-Komponenten-Polyurethanbinder oder andere Bindemittel oder Mischungen aus diesen Bindemitteln handeln. Insgesamt ergibt sich daraus der in Fig. 1 dargestellte konglomeratartige Aufbau, in dem die einzelnen Körner 2 und 3 auch nach optischen Kriterien in der Regel noch gut zu erkennen sind. Zumindest 70%, vorzugsweise 90% der Körner 2 und 3 weisen günstigerweise eine Korngröße zwischen 1 mm und 20 mm, vorzugsweise zwischen 5mm und 10mm auf. Dies gilt vorzugsweise für die Körner 2 des zelligen Polyurethanelastomers und/oder die Körner 3 des Gummigranulats. Der Anteil der Körner 2 aus zelligem Polyurethanelastomer beträgt günstigerweise zwischen 10 Gew.-% und 50 Gew.-%, vorzugsweise zwischen 15 Gew.-% und 20 Gew.-%, bezogen auf die Matte bzw. den Formkörper. Der Anteil der Körner 3 des geschäumten Gummielastomers liegt günstigerweise zwischen 35 Gew.-% und 85 Gew.-%, wiederum bezogen auf die Matte bzw. den Formkörper. Für eine stabile Verbindung der Körner reicht in der Regel ein Anteil des Bindemittels 4 an der Matte bzw. dem Formkörper zwischen 5 Gew.-% und 15 Gew.-% aus.

Zur Herstellung einer Matte bzw. eines Formkörpers, wie sie in Fig. 1 gezeigt ist, sieht ein günstiges Verfahren vor, dass die Körner 3 des Gummigranulats und die Körner 2 des Granulats aus dem zelligem Polyurethanelastomer mit dem Bindemittel 4 gemischt werden und anschließend die so hergestellte Mischung, vorzugsweise unter Hinzufügung von Wärme und/oder in einem Hohlkörper gepresst wird. Z. B. kann das Pressen der aus den genannten Komponenten sowie gegebenenfalls noch zusätzlich vorhandenen Füllstoffen bestehenden Mischung in einem Reaktionsbehälter wie z.B. einem Zylinder erfolgen. Es reicht dabei ein Druck von wenigen bar, also z. B. 2 bis 3 bar Überdruck aus. Die Temperatur sollte günstigerweise auf 70° bis 80° Celsius eingestellt werden, wobei dies aber nicht zwingend notwendig ist. Das z. B. in Form eines prepolymeren Isocyanats vorliegende Bindemittel 4 reagiert jedenfalls unter diesen Bedingungen rasch und vollständig mit der, an den einzelnen Körnern 2 und 3 noch anhaftenden Restfeuchte, so dass im Ergebnis ein Zylinder aus miteinander ausreichend fest verbundenen Körnern 2 und 3 hergestellt ist. Dieser kann dann mit an sich bekannten Verfahren geschält oder zugeschnitten werden, um die Matten in der gewünschten Dicke oder anders geformte Formkörper herzustellen.

Das Ausführungsbeispiel gem. Fig. 2 dient zur Visualisierung einer zweiten Gruppe von bevorzugten erfindungsgemäßen Ausführungsbeispielen. Bei diesen bildet das zellige Polyurethanelastomer eine Matrix 2, also ein Stoffgerüst, in das die Körner 3 des Gummigranulats, also insbesondere des geschäumten Gummielastomers eingebettet sind. Der Anteil des zelligen Polyurethanelastomers 1 an dem Formkörper bzw. der Matte beträgt entsprechend günstigerweise zwischen 50 Gew.-% und 80 Gew.-%. Der Anteil der Körner 3 des geschäumten Gummielastomers an dem Formkörper bzw. an der Matte liegt bei diesen Ausführungsvarianten günstigerweise zwischen 20 Gew.-% und 50 Gew.-%. Auf ein zusätzliches Bindemittel kann bei diesen Ausgestaltungsformen aufgrund der Einbettung der Körner 3 in die Matrix 1 verzichtet werden. Abweichend vom gezeigten Ausführungsbeispiel ist es sogar denkbar, dass neben Körnern 3 des Gummigranulats in die Matrix 1 aus zelligem Polyurethanelastomer auch Körner aus zelligem Polyurethanelastomer eingebettet sind.

Zur Herstellung von Ausführungsbeispielen, bei denen das zellige Polyurethanelastomer eine Matrix bildet, gibt es zwei verschiedene Gruppen von Verfahren. Bei der ersten werden die Körner 3 des Gummigranulats, also insbesondere die Körner 3 aus geschäumtem Gummielastomer, mit einer ersten Komponente, z. B. einer Polyolkomponente oder einer Dyolkomponente oder einer anderen OH-gruppenhaltige Komponente des zelligen Polyurethanelastomers gemischt. Diese vorgefertigte Mischung wird dann durch Zugabe von Isocyanat oder einer anderen weiteren Komponente des Polyurethanelastomers zur Reaktion gebracht.

Die Form, in der diese Reaktion durchgeführt wird, kann bereits die endgültige Form der Matte bzw. des Formkörpers vorgeben. Es ist aber genauso gut möglich, einen größeren Körper herzustellen um die Formkörper bzw. Matten dann, z. B. durch Abschälen oder anderweitiges Zerschneiden, herzustellen.

Ein bevorzugtes zweites Verfahren zur Herstellung eines Formkörpers bzw. einer Matte, bei der eine Matrix 1 aus zelligem Polyurethanelastomer zum Einbetten der Körner 3 verwendet wird, sieht vor, dass die Körner 3 des Gummigranulats mit einem fertig gemischten Reaktionsgemisch des zelligen Polyurethanelastomers 1 gemischt werden und erst anschließend das Reaktionsgemisch zur Matrix aus zelligem Polyurethanelastomer ausreagiert wird. Dies kann z. B. dann durch thermisches Aktivieren, vorzugsweise in dem weiter oben genannten Temperaturbereich zwischen 70° und 80° erfolgen. Alternativ ist es auch möglich, ein entsprechend langsam reagierendes Reaktionsgemisch zu verwenden, so dass man genug Zeit hat, die Körner 3 des Gummigranulats unter zu mischen. Dies muss dann nicht zwangsläufig thermisch aktiviert werden. Auch bei diesem letztgenannten Verfahren ist es möglich, die Reaktion in einem Reaktionsbehälter durchzuführen, der bereits die Form der endgültigen Matte bzw. des endgültigen Formkörpers vorgibt. Alternativ ist es natürlich auch hier möglich, größere Körper in einem Stück zu produzieren, um dann durch Abschälen oder Zerschneiden die gewünschten Endprodukte herzustellen.

### Legende zu den Hinweisziffern:

- 1: Matrix aus zelligem Polyurethanelastomer
- 2: Korn aus zelligem Polyurethanelastomer
- 3: Korn aus geschäumtem Gummielastomer
- 4: Bindemittel

## Patentansprüche

1. Formkörper, insbesondere Matte, zur Schwingungsisolierung mit einem zelligen Polyurethanelastomer (1, 2) und mit einem Gummigranulat, **dadurch gekennzeichnet, dass** das zellige Polyurethanelastomer (1, 2) eine Dichte von zumindest 150 kg/m³ aufweist und das Gummigranulat Körner (3) aus geschäumtem Gummielastomer aufweist oder daraus besteht.

2. Formkörper nach Anspruch 1, **dadurch gekennzeichnet, dass** das zellige Polyurethanelastomer (1, 2) und die Körner (3) des Gummigranulats in Form einer heterogenen Mischung in dem Formkörper angeordnet sind.

3. Formkörper nach Anspruch 1 oder 2, **dadurch gekennzeichnet, dass** das Gummigranulat zumindest zu 50 Gew.-%, vorzugsweise zumindest zu 80 Gew.-%, aus Körnern (3) aus geschäumtem Gummielastomer besteht.

4. Formkörper nach einem der Ansprüche 1 bis 3, **dadurch gekennzeichnet, dass** eine Porosität des zelligen Polyurethanelastomers (1, 2) und/oder der Körner (3) des geschäumten Gummielastomers zumindest 10% beträgt.

5. Formkörper nach einem der Ansprüche 1 bis 4, **dadurch gekennzeichnet, dass** die Korngröße von zumindest 70%, vorzugsweise von zumindest 90%, der Körner (3) aus geschäumten Gummielastomer zwischen 1 mm und 20mm, vorzugsweise zwischen 5mm und 10mm, beträgt.

6. Formkörper nach einem der Ansprüche 1 bis 5, **dadurch gekennzeichnet, dass** das zellige Polyurethanelastomer eine Matrix (1) bildet, in die Körner (3) des Gummigranulats eingebettet sind, wobei vorzugsweise der Anteil der Matrix (1) aus zelligem Polyurethanelastomer (1) an dem Formkörper zwischen 50 Gew.-% und 80 Gew.-% beträgt.

7. Formkörper nach Anspruch 6, **dadurch gekennzeichnet, dass** der Anteil der Körner (3) des geschäumten Gummielastomers an dem Formkörper zwischen 20 Gew.-% und 50 Gew.-% beträgt.

8. Formkörper nach einem der Ansprüche 1 bis 5, **dadurch gekennzeichnet, dass** der Formkörper Körner (2) eines Granulats aus dem zelligen Polyurethanelastomer aufweist, vorzugsweise das zellige Polyurethanelastomer ausschließlich in Form von Körnern (2) eines Granulats in dem Formkörper vorliegt.

9. Formkörper nach Anspruch 8, **dadurch gekennzeichnet, dass** die Körner (2) aus zelligem Polyurethanelastomer und die Körner (3) des Gummigranulats, vorzugsweise des geschäumten Gummielastomers, mittels eines Bindemittels (4) miteinander verbunden sind.

10. Formkörper nach Anspruch 9, **dadurch gekennzeichnet, dass** das Bindemittel (4) ein Ein-Komponenten-Polyurethanbinder, vorzugsweise prepolymeres Isocyanat, und/oder ein Zwei-Komponenten-Polyurethanbinder aufweist oder daraus besteht.

11. Formkörper nach einem der Ansprüche 8 bis 10, **dadurch gekennzeichnet, dass** der Anteil der Körner (2) aus zelligem Polyurethanelastomer an dem Formkörper zwischen 10 Gew.-% und 50 Gew.-%, vorzugsweise zwischen 15 Gew.-% und 25 Gew.-%, beträgt und/oder der Anteil der Körner (3) aus geschäumtem Gummielastomer an dem Formkörper zwischen 35 Gew.-% und 85 Gew.-% beträgt.

12. Formkörper nach einem der Ansprüche 9 bis 11, **dadurch gekennzeichnet, dass** der Anteil des Bindemittels (4) an dem Formkörper zwischen 5 Gew.-% und 15 Gew.-% beträgt.

13. Verfahren zur Herstellung eines Formkörpers nach einem der Ansprüche 6 oder 7, **dadurch gekennzeichnet, dass** die Körner (3) des Gummigranulats, vorzugsweise des geschäumten Gummielastomers, mit einem fertig gemischten Reaktionsgemisch des zelligen Polyurethanelastomers (1) oder mit zumindest einer Komponente des Reaktionsgemisches des zelligen Polyurethanelastomers (1) gemischt werden und anschließend das Reaktionsgemisch, gegebenenfalls unter Hinzufügung von zumindest einer zweiten Komponente des Reaktionsgemisches des zelligen Polyurethanelastomers (1) und/oder Wärme, zu zelligem Polyurethanelastomer ausreagiert wird.

14. Verfahren zur Herstellung eines Formkörpers nach einem der Ansprüche 8 bis 12, **dadurch gekennzeichnet, dass** die Körner (3) des Gummigranulats, vorzugsweise des geschäumten Gummielastomers, und die Körner (2) des Granulats aus dem zelligen Polyurethanelastomer mit dem Bindemittel (4) gemischt werden und anschließend die so hergestellte Mischung, vorzugsweise unter Hinzufügung von Wärme, gepresst wird.

15. Verfahren nach Anspruch 14, **dadurch gekennzeichnet, dass** die so hergestellte Mischung in einem Hohlkörper gepresst wird.

## Claims

1. A moulded part, in particular a mat, for vibration isolation, having a cellular polyurethane elastomer (1, 2) and having a rubber granulate, **characterised in that** the cellular polyurethane elastomer (1, 2) has a density of at least 150 kg/m³ and the rubber granulate has grains (3) of expanded rubber elastomer or consists thereof.

2. A moulded part according to claim 1, **characterised in that** the cellular polyurethane elastomer (1, 2) and the grains (3) of the rubber granulate are arranged in the moulded part in the form of a heterogeneous mixture.

3. A moulded part according to claim 1 or 2, **characterised in that** the rubber granulate consists at least 50% by weight, preferably at least 80% by weight, of grains (3) of expanded rubber elastomer.

4. A moulded part according to any one of claims 1 to 3, **characterised in that** a porosity of the cellular polyurethane elastomer (1, 2) and/or of the grains (3) of the expanded rubber elastomer amounts to at least 10%.

5. A moulded part according to any one of claims 1 to 4, **characterised in that** the grain size of at least 70%, preferably at least 90%, of the grains (3) of expanded rubber elastomer is between 1mm and 20 mm, preferably between 5 mm and 10 mm.

6. A moulded part according to any one of claims 1 to 5, **characterised in that** the cellular polyurethane elastomer forms a matrix (1) in which grains (3) of the rubber granulate are embedded, wherein preferably the proportion of the matrix (1) of cellular polyurethane elastomer (1) at the moulded part is between 50% by weight and 80% by weight.

7. A moulded part according to claim 6, **characterised in that** the proportion of the grains (3) of the expanded rubber elastomer at the moulded part is between 20% by weight and 50% by weight.

8. A moulded part according to any one of claims 1 to 5, **characterised in that** the moulded part has grains (2) of a granulate of the cellular polyurethane elastomer, preferably the cellular polyurethane elastomer is present in the moulded part solely in the form of grains (2) of a granulate.

9. A moulded part according to claim 8, **characterised in that** the grains (2) of cellular polyurethane elastomer and the grains (3) of the rubber granulate, preferably of the expanded rubber elastomer, are connected to one another by means of a binding means (4).

10. A moulded part according to claim 9, **characterised in that** the binding means (4) has or consists of a single-component polyurethane binder, preferably prepolymer isocyanate, and/or a two-component polyurethane binder.

11. A moulded part according to any one of claims 8 to 10, **characterised in that** the proportion of the grains (2) of cellular polyurethane elastomer at the moulded part is between 10% by weight and 50% by weight, preferably between 15% by weight and 25% by weight, and/or the proportion of the grains (3) of expanded rubber elastomer at the moulded part is between 35% by weight and 85% by weight.

12. A moulded part according to any one of claims 9 to 11, **characterised in that** the proportion of the binding means (4) at the moulded part is between 5% by weight and 15% by weight.

13. A method of manufacturing a moulded part according to one of claims 6 and 7, **characterised in that** the grains (3) of the rubber granulate, preferably of the expanded rubber elastomer, are mixed with a ready mixed reaction mixture of the cellular polyurethane elastomer (1) or with at least one component of the reaction mixture of the cellular polyurethane elastomer (1) and then the reaction mixture, optionally with the addition of at least a second component of the reaction mixture of the cellular polyurethane elastomer (1) and/or heat, undergoes full reaction to form a cellular polyurethane elastomer.

14. A method of manufacturing a moulded part according to any one of claims 8 to 12, **characterised in that** the grains (3) of the rubber granulate, preferably of the expanded rubber elastomer, and the grains (2) of the granulate of the cellular polyurethane elastomer are mixed with the binding means (4) and then the mixture produced in this manner is squeezed, preferably with the addition of heat.

15. A method according to claim 14, **characterised in that** the mixture manufactured in this manner is squeezed in a hollow body.

## Revendications

1. Article moulé, notamment un tapis, isolant contre les vibrations contenant un élastomère de polyuréthane alvéolaire (1, 2) et un granulat de caoutchouc, **caractérisé en ce que** l'élastomère de polyuréthane alvéolaire (1, 2) présente une densité d'au moins 150 kg/m³ et **en ce que** le granulat de caoutchouc présente des granules (3) en mousse d'élastomère de caoutchouc ou bien se compose de ceux-ci.

2. Article moulé selon la revendication 1, **caractérisé en ce que** l'élastomère de polyuréthane alvéolaire (1, 2) et les granules (3) du granulat de caoutchouc sont agencés dans l'article moulé sous la forme d'un mélange hétérogène.

3. Article moulé selon la revendication 1 ou 2, **caractérisé en ce que** le granulat de caoutchouc se compose d'au moins 50 % en poids, de préférence d'au moins 80 % en poids de granules (3) en mousse d'élastomère de caoutchouc.

4. Article moulé selon l'une des revendications 1 à 3, **caractérisé en ce que** la porosité de l'élastomère de polyuréthane alvéolaire (1, 2) et/ou des granules (3) en mousse d'élastomère de caoutchouc s'élève à au moins 10 %.

5. Article moulé selon l'une des revendications 1 à 4, **caractérisé en ce que** la granulométrie d'au moins 70 %, de préférence d'au moins 90 % des granules (3) en mousse d'élastomère de caoutchouc est comprise entre 1 mm et 20 mm, de préférence entre 5 mm et 10 mm.

6. Article moulé selon l'une des revendications 1 à 5, **caractérisé en ce que** l'élastomère de polyuréthane alvéolaire forme une matrice (1) dans laquelle sont noyés les granules (3) du granulat de caoutchouc, la proportion de matrice (1) en élastomère de polyuréthane alvéolaire (1) de l'article moulé étant de préférence comprise entre 50 % en poids et 80 % en poids.

7. Article moulé selon la revendication 6, **caractérisé en ce que** la proportion de granules (3) en mousse d'élastomère de caoutchouc de l'article moulé est comprise entre 20 % en poids et 50 % en poids.

8. Article moulé selon l'une des revendications 1 à 5, **caractérisé en ce que** l'article moulé présente des granules (2) provenant d'un granulat d'élastomère de polyuréthane alvéolaire, l'élastomère de polyuréthane alvéolaire se présentant de préférence dans l'article moulé exclusivement sous la forme de granules (2) de granulat.

9. Article moulé selon la revendication 8, **caractérisé en ce que** les granules (2) d'élastomère de polyuréthane alvéolaire et les granules (3) du granulat de caoutchouc, de préférence de la mousse d'élastomère de caoutchouc, sont liés les uns aux autres au moyen d'un liant (4).

10. Article moulé selon la revendication 9, **caractérisé en ce que** le liant (4) présente ou se compose d'un liant polyuréthane monocomposant, de préférence un prépolymère d'isocyanate, et/ou d'un liant polyuréthane bicomposant.

11. Article moulé selon l'une des revendications 8 à 10, **caractérisé en ce que** la proportion de granules (2) d'élastomère de polyuréthane alvéolaire de l'article moulé est comprise entre 10 % en poids et 50 % en poids, de préférence entre 15 % en poids et 25 % en poids et/ou la proportion de granules (3) en mousse d'élastomère de caoutchouc de l'article moulé est comprise entre 35 % en poids et 85 % en poids.

12. Article moulé selon l'une des revendications 9 à 11, **caractérisé en ce que** la proportion de liant (4) de l'article moulé est comprise entre 5 % en poids et 15 % en poids.

13. Procédé de fabrication d'un article moulé selon l'une des revendications 6 ou 7, **caractérisé en ce que** les granules (3) du granulat de caoutchouc, de préférence de la mousse d'élastomère de caoutchouc, sont mélangés à un mélange réactionnel d'élastomère de polyuréthane alvéolaire (1) déjà constitué ou à au moins un composant du mélange réactionnel d'élastomère de polyuréthane alvéolaire (1), et **en ce qu'**on fait ensuite totalement réagir le mélange réactionnel, le cas échéant avec adjonction d'au moins un second composant du mélange réactionnel d'élastomère de polyuréthane alvéolaire (1) et/ou de chaleur, afin d'obtenir l'élastomère de polyuréthane alvéolaire.

14. Procédé de fabrication d'un article moulé selon l'une des revendications 8 à 12, **caractérisé en ce qu'**on mélange les granules (3) du granulat de caoutchouc, de préférence de la mousse d'élastomère de caoutchouc et les granules (2) du granulat d'élastomère de polyuréthane alvéolaire avec liant (4) et **en ce qu'**on presse ensuite le mélange ainsi préparé, de préférence avec adjonction de chaleur.

15. Procédé selon la revendication 14, **caractérisé en ce que** le mélange ainsi préparé est pressé dans un corps creux.
